Europäisches Patentamt

European Patent Office

Office européen des brevets

(19)

(11) Publication number: **0 464 333 A2**

# EUROPEAN PATENT APPLICATION

(21) Application number: **91106591.0**

(22) Date of filing: **24.04.91**

(51) Int. Cl.⁵: **G06F 12/10**

(30) Priority: **03.07.90 US 547881**

(43) Date of publication of application:
**08.01.92 Bulletin 92/02**

(84) Designated Contracting States:
**DE FR GB**

(71) Applicant: **International Business Machines Corporation**
**Old Orchard Road**
**Armonk, N.Y. 10504(US)**

(72) Inventor: **Chuang, Chiao-Mei**

3 Patricia Lane
Briarcliff Manor, New York 10510(US)
Inventor: **Kannan, Krishnamurti**
2715 Evergreen Street
Yorktown Heights, New York 10598(US)
Inventor: **Matick, Richard E.**
14 Lakeview Avenue East
Peekskill, New York 10566(US)

(74) Representative: **Rudolph, Wolfgang, Dipl.-Ing.**
**IBM Deutschland GmbH Schönaicher**
**Strasse 220**
**W-7030 Böblingen(DE)**

(54) **Virtual memory.**

(57) The invention comprises providing a plurality of translation control registers (CR3) rather than a single such register each of which is associated with a plurality of segment selectors stored in a segment table currently active on the system. An N-bit segment identifier address field is utilizied to access a particular translation control register. The N-bit field is derived from the segment selector portion of the virtual address. The N-bit identifier field may be utilized to access the designated control register and thus the associated base address in the page translation tables for translating the virtual memory address into a real address. The N-bit field is also stored in and becomes a part of the translatable virtual page address in the translation lookaside buffers which are utilizied during normal translation procedures.

According to a further aspect of the invention the N-bit translation control register address fields may be seperately stored in a set of N-bit translation control address registers where as many such address registers are provided as there are translation control registers in the system. During the translation phase of the memory access operation, the N-bit segment identifier field may be utilizied to access a predetermined translation control address register which may then be utilizied to access any desired data segment in the virtual memory hierarchy pointed to by that particular N-bit field and associated translation control register.

FIG. 1

The present invention relates to memory management facilities according to the preamble of claim 1 or 5.

Most commercially available computers, from large systems down to microprocessors, include a virtual addressing capability. In general, a large virtual address simplifies the memory management and programming problems. Because of this, the industry trend over the years (IBM 360/370, PC/RT - RS/6000, Intel 80X86) has been to increasingly larger virtual addressing capability. The exact method for achieving this capability has, and does vary both between different systems of the same company, and those of different companies. There is no one best or optimum method for achieving this, but rather each approach has its advantages and disadvantages, and attendant cost/performance trade-off.

The larger the virtual address space, the more attractive is the architecture for any processor. However, implementation of a very straightforward type of large virtual address is expensive as well as difficult. Thus over the years there have been numerous proposals and architectures which include features to attempt to mimic the desirable features of a large virtual address without really providing a large virtual address in the strictest sense. As a result, the actual or true virtual address of a system is often interpreted differently and sometimes incorrectly at different levels of a system, or for different systems. This leads to confusion as to the correct interpretation of the "virtual address".

For instance, the IBM PC/RT and RS/6000 use a simple segmentation scheme in which the high order 4 bits of any given 32 bit effective address point to 1 of 16 registers which contains 12 to 20 bits. The latter bits are an "external" or system name for that segment. These 12/20 bits are catenated to the remaining 28 bits of the effective address to give the appearance of a 40/48 bit "virtual" address which is translated. However, since changing the 12/20 bit segment names in the segment registers is a very complex and time consuming process, there are really only 16 such segments available to the system at any instant of time, and thus the true virtual address is only 32 bits.

Another example, and the type of architecture of particular interest to the present invention is that of the INTEL 80X86 systems. A segment organization is used which is very different and more complex than those of the above IBM systems. Nevertheless, because of the way the segmentation is implemented, the result is the same, namely, the segmentation does not improve the actual or true virtual addressing capabilities of the system.

To be more specific, the virtual address for the INTEL 80X86 architecture is often arrived at by multiplying the maximum size of a segment (which is 4G bytes) by the maximum number of segments that can be defined to the system, which is 16384, regardless of any other issues. This gives the equivalent of 46 bits of address space. This value is usually quoted as being the effective virtual address space of such a system.

However, the definition of virtual address required to reach this conclusion allows us to extend the virtual address size to any value without any changes to the system and thus is meaningless.

It will be shown subsequently that when the proper definition of virtual address is applied, such processor architectures do not provide a 46-bit virtual address, and in fact have no more than a 32-bit address space which is very similar to virtual address spaces used extensively in the past (e.g. IBM S370/168 processor).

The INTEL 80X86 family of processors provides a very specific type of segmented virtual addressing for code and data segments. While improvements to this specific architecture represent the preferred embodiment of the present invention the ideas and concepts are applicable to any similar or related system or architecture. The generic architecture of interest is one for which the total system address space is conceptually broken into smaller logical units typically called segments (other names will not change the basic concepts). During typical processing of information, the segment containing the information to be accessed can change dynamically from cycle to cycle. The current segment of interest is identified by some mechanism which does not directly use the effective address bits generated for any memory access. In addition, the segment name, once obtained, is translated to the segment base address and then added to the effective address to obtain the final Linear address.

Note in the above IBM systems, the segment names are partially dependent on the effective address since the higher order 4 address bits are directly used to point to a segment register; however, the names contained within the segment registers are themselves independent of the effective address. In addition, the segment name is catenated to the remaining effective address to get the Linear address. Thus the IBM systems contain a small portion in common, but the bulk of the segmentation is different.

In order to generalize the concepts presented here, a generic system, called a UNISPACE architecture is defined, and only those characteristics which are relevant to this architecture will be described subsequently. UNISPACE refers to the fact that only one translatable address space is implemented in one CR3 register - the present teaches how to implement a MULTISPACE architecture with minor modifications to the UNISPACE architecture. It is noted that in the INTEL 80X86 family, the CR3 register is a Control Register used in memory accessing operations.

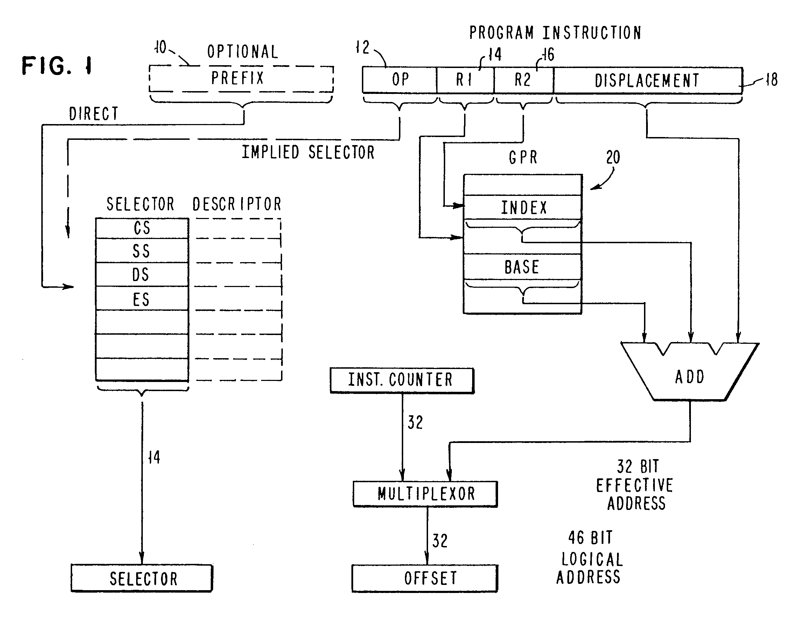

The UNISPACE system has an independent mechanism for selecting the segment of current interest, and making it part of the final linear address. Specification of the current segment of interest is done as follows. Referring to Fig. 1, for each program instruction, the segment is identified either by a separate, specific prefix field 10 of the instruction code or is implied by the type of instruction, e.g. from the opcode field 12. The latter is accomplished if no segment prefix is directly specified. For such a case, a reference to code will automatically access a Code Segment, CS; a reference to data to a Data Segment, DS; a reference to the stack to the Stack Segment, SS, etc. for any number of such segments as it is desired to identify and provide hardware to access automatically.

The above will now be considered in more detail in order to understand the significance and meaning of segment addresses.

The program instruction which generate effective addresses for memory accessing can have many different formats with one typical, common form shown in Fig. 1. One field 14 of the instruction accesses a BASE and one field 16, an INDEX (optional) from the general purpose registers stack 20, GPR. The displacement field 18 from the instruction is added to the BASE and INDEX to obtain the EFFECTIVE ADDRESS. The opcode 12 of the instruction will indicate what type of operation is being performed such as a branch (code), memory operand (data), stack operation (stack segment), etc. If the instruction does not have a selector prefix field, then the current segment of interest is taken as that implied by the opcode field 12 as above. If there is a prefix field 10, this overrides the implied segment name and is used to point to the selector. If the memory access is not as above but rather is an Instruction-Fetch via the Instruction Counter address, then typically the Code Segment is used. In any case, each program instruction has a well-defined segment name which is either given or implied.

A Selector is fundamentally an "external" name which points to the beginning (base) address of that segment. A Selector (name) for each segment defined for the system is contained in a logical construct called a Descriptor (Gate Descriptors) stored in a Descriptor Table in memory. However, for speed and efficiency, the selectors for each of the most recently used of several types of segments (CS, SS, DS, ES, etc.) are maintained by the hardware in conjunction with the operating system in several segment registers for the corresponding, appropriate segment as shown. These values can be replaced when calls are made to other segments which are not included in one of these registers. The method for achieving this is not relevant for this patent.

At this point, the 46 bit LOGICAL address can be identified as the 14 bit Selector catenated to the 32 bit Effective address, called the OFFSET now.

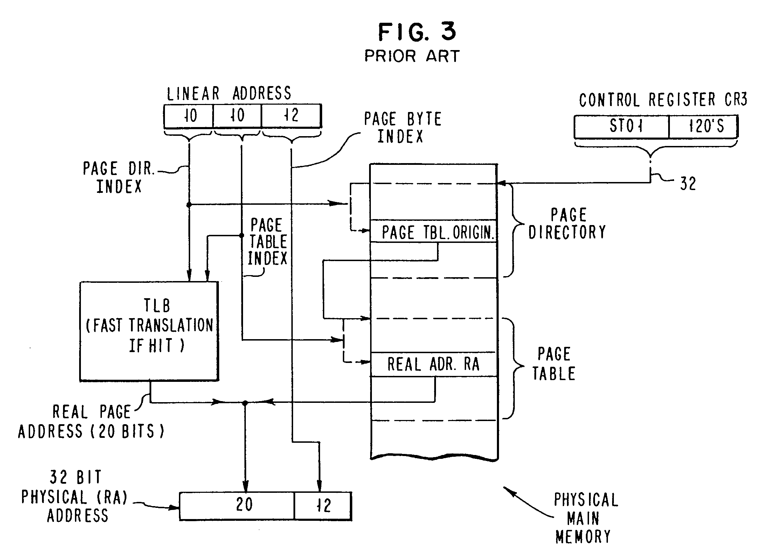

Once the Selector name has been determined, it must be translated to give the starting address of that segment in linear space (note, the segment name can stay the same but the starting location in linear space can change from time to time, or from system to system). Referring to Fig. 3, translation is accomplished in the usual manner, by means of a table called Descriptor table. A system control register contains the base of this table in memory. The Selector (segment name) is the index into this table, from the base. The information accessed is called a Descriptor, which contains many pieces of information such as access rights, length, Present bit (has segment been defined to the system), the Base, etc.

The 32 bit Base is added to the 32 bit OFFSET to produce a 32 bit LINEAR address. This Descriptor Table is stored in memory and must be accessed from memory the first time. Once this is done, the Descriptor which corresponds to a given Selector is placed in the set of segment registers in the CPU which have a one to one correspondence to each of the Selectors as previously described. This avoids multiple memory accesses on subsequent references to this segment, and is basically a very simple type of TLB (Translation Lookaside Buffer) used for the paging translation described later, used for many years in many systems. Once again, the details and actual method of translation of Selector to Linear address via tables is not important. However, one important point is that this 32 bit LINEAR address is, in fact, the true virtual address of the system. This results from the fact that any segment must be located (have its base) within the 32 bit address limit. While this gives complete generality as to the starting location of the segment within the 32 bit space, it does nothing to increase the virtual addressing capability of the system.

This 32 bit linear address is translated to a PHYSICAL (Real) memory address as in Fig. 3 by a very conventional technique using page tables stored in memory supplemented by a TLB (Translation Lookaside Buffer) to avoid having to access memory for the Physical address for each access to information. This PHYSICAL address is the final address of the desired information and is used to access the physical memory. The CR3 Register contains the Real base of the current segment translation table. Since there is only one such register, only one segment can truly be exposed for translation on any given cycle. This concept of only one exposed segment resulting from this type of organization is fundamental, and a serious limit which is rectified by this invention.

The important characteristics or limitations of the UNISPACE segmented system which relate to and are important to the present invention are;

1. Segments are defined and accessed by a mechanism which does not directly use any bits of the effective address, and thereby does not decrease the size of the OFFSET.

2. The segments so defined are confined to reside within the original 32 bit address space, i.e. the segmentation does not increase the size of the translated address which is a 32 bit LINEAR address.

It will be seen that an attractive extension to the existing virtual space with minimal changes in the architecture is feasible and is described in detail subsequently. Utilizing the teachings herein, a true 46-bit, or other larger/smaller virtual address space could be incorporated in various ways, with each having different impact on the system architecture.

In order to make the underlying issues clear, a short discussion and definition of virtual addressing will follow.

A common, working definition of virtual address is the maximum total address range available to a user for writing any given program. Unfortunately, by itself this definition is not sufficient. The reason is that if performance is of no concern, then most computing systems can be fitted with an operating system which can give the appearance of nearly unlimited address space. In fact, all systems do this in one simple form -- over the course of say, one year, a very large number of programs can be run on the same system so in that time period the virtual space looks very large. Furthermore, as a user it is possible to submit for instance, 10 large jobs one after the other with each one consuming the entire available address space of the system. Internally these programs are overlayed one by one into memory. However, externally the user does not see this but rather over some time range, the system appears to have a very large address space. This brings us to the fundamental issue, that of time, performance, and simultaneity. The true virtual address of any system is that total address which can simultaneously be valid and translatable (exposed) to the system. Although seldom explicitly defined, this is the classical definition implied by the general use of the term virtual address.

The term "simultaneously translatable" or "exposed" is of fundamental significance since the functional implementation of this is the limiting and distinguishing factor between various systems.

More specifically, if a total virtual address of $N_v$ bits is given, then it is possible to have any or all of these addresses simultaneously (on the same cycle) valid and translatable within the translation function provided by this system, i.e., all $N_v$ bits are exposed to the translation mechanism in any given cycle. For any given accesses, only the one virtual address initially given will be translated by the system hardware/software to an actual main memory location, but all can have an equal shot at it, so to speak. The performance of a given virtual address space which is all simultaneously translatable will be orders of magnitude better than one in which only some part of the supposed virtual address in simultaneously translatable, on any one cycle, and requires a complex operating system to expose the remaining addresses in other cycles.

Therefore, the definition of a virtual address space may be rephrased in a more useful form, namely, the effective virtual address of any system is the total effective address which is fully and simultaneously translatable to the actual main memory address on a given cycle.

It should be noted that, based on this definition, the true effective virtual address of any system can never be larger than the number of address bits translated to the physical, real memory address. However, it can be less than the number of bits translated because some of the objects referenced by the given address space may not be simultaneously translatable or exposed to the translation mechanism or any given cycle.

The UNISPACE architecture and the previously referenced Intel 80X86 microprocessor, for example, make use of a rather unique segmentation and virtual addressing technique. Externally, a user may see a 46 bit address space but internally the effective, simultaneously translatable address space is 32 bits. If the previous definition of virtual address space is accepted and one looks inside the 80X86, it may be seen that the hardware translates a 32 bit linear address to a 32 bit physical memory address and hence provides an effective 32 bit virtual address space. However, the user can specify a 14 bit selector (segment name) which is used for segment selection so this begs an explanation as to the function of the selector. This is the part that is most confusing to users and designers as well. Ignoring the segment protection aspect and focusing strictly on the virtual addressing capability, the 14 bit segment selector is essentially nothing more than an "external" name associated with a segment and has no effect on the virtual address. The selector is converted into a 32 bit base which only points to the beginning of that segment in a 32 bit linear address space, and contributes nothing to the size of the virtual address space.

In order to avoid any possible misunderstandings resulting from different definitions or interpretations of what a virtual address space is, and can do, a hypothetical case will be presented which attempts to just use two 32-bit address spaces which is the equivalent of a true 33 bit virtual address. It will be seen that this requires the user to manage the overlaying of the two 32 bit address spaces, which is fundamentally not much different than that required by any other system with a 32 bit virtual address space. The 80386 does provide one convenience which would not be available on a more conventional system, namely built-in hardware to warn the user that a given access is to an overlayed area which is not part of the current address space (i.e., the Present bit in descriptors, which can cause an exception if an unmapped virtual address is referenced). However, the user (which includes the supervisor in this case) may ignore the warning (turn the present bit on) and purposely access a different address space. If the two address spaces are properly mapped in linear space, this is not only possible, but necessary for the sharing of common system functions, for example. For address spaces which are not properly overlayed, this would be disastrous, and nothing in the system prevents this from being done. In a true 46 bit virtual address space, such a disaster could not occur.

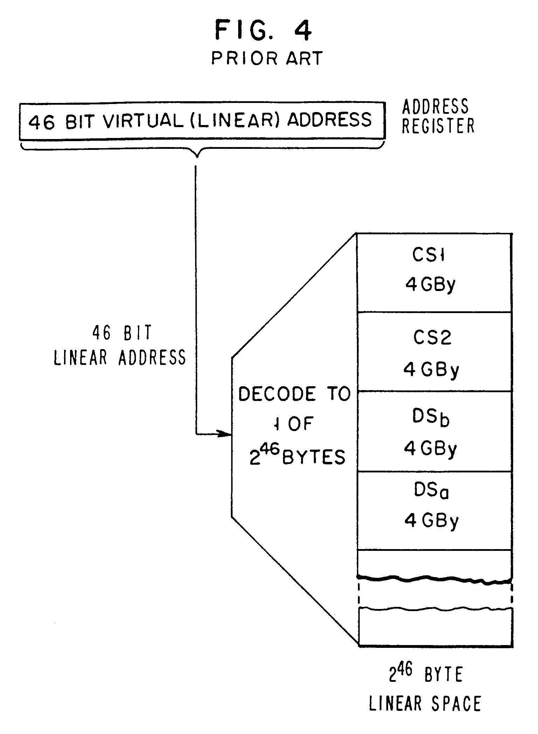

Consider the following hypothetical case: A program consists of two code spaces, CS1 and CS2, each requiring a 32 bit address space (i.e., 4G bytes). In an actual system, there could and probably would also be independent data segments mapped into the virtual space. For instance, two data segments, DSa and DSb, each requiring 32 bits of address space, could easily be accommodated. A very simple linear mapping of these segments into virtual space could be as shown in Fig. 4 - obviously the segments need not be packed one after the other, as long as they do not overlap in virtual space.

It is further assumed that during processing, each code segment calls procedures from the other code segment so there are intersegment procedure calls. In the following example, only the problem of procedure calls between code segments will be considered, the data segments are not important in the discussion. In a true 46 bit virtual (linear) address space, these 4 segments can coexist, have unique addresses, and cannot address into each other if properly mapped.

If a procedure in CS1 calls a procedure in CS2 with the correct virtual address, the translation mechanism will get to the correct procedure with no uncertainty. All 46 bits of the address are translated to the real physical main memory address. (See Fig. 3) If necessary, the paging mechanism will have to load the correct information from a disk, but there is no ambiguity about the linear address. Any given 46 bit address can point to one and only one location (byte) in memory.

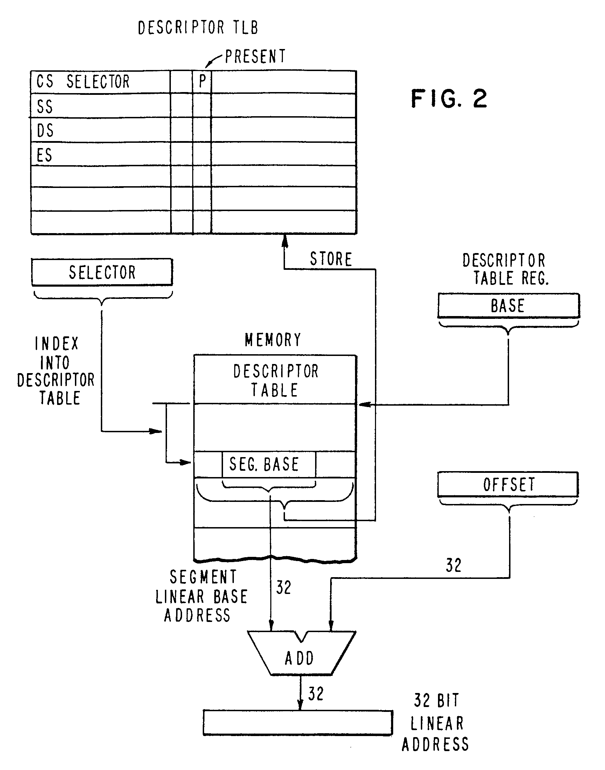

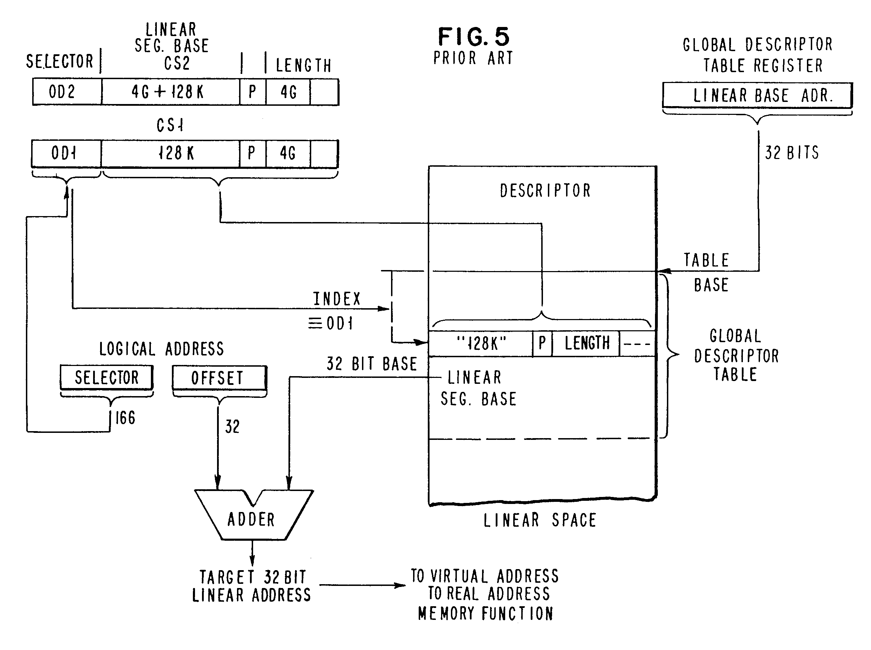

To implement such a virtual space or the UNISPACE architecture, the following must occur. Assume that one has full control over the entire system and in fact will provide whatever supervisor is necessary. CS1 has been loaded onto a 32 bit linear space starting at linear address (base) 128K, and a descriptor has been created in a descriptor table at an offset of OD1 bytes from the linear address base of the table. This requires that the Selector for this segment be of value OD1 and the linear base part of the descriptor contain the address 128K as shown in Fig. 5. The final address which is mapped and translated to the real memory address is the 32 bit linear address formed by ADDING the 32 bit linear segment base to the 32 bit offset from the logical address, as shown in Fig. 2 and Fig. (LINEAR). This 32 bit logical offset is the address formed during an earlier Address Generation cycle by adding a base to a displacement (With possibly an index also) as shown in Fig. EFFECTIVE.

Since it is desirable to operate in virtual addressing mode, it is necessary to construct the translation tables and map them into virtual space. Assume this is done in CS1 with the Translation tables starting at address STO1. This STO1 address is typically mapped in the virtual space, but to simplify the operating system, is given a long term fix in main memory at physical address of value equal to STO1'. This latter value is the address stored in the Intel Control Register CR3, and is the physical base of the page directory as shown in Fig. 3. (The CR3 register would be loaded by the operating system as an explicit load or automatically for certain task switches which jump to a different address apace.) The page directory contains page table origins and the page tables contain the RA, Real or Physical Address, of the page in main memory. The 12 low order bits of the linear address are the real, byte index into the page (see Section III-1a. of Ref. 5 for a discussion of partitioning of translation tables into segment and page tables). Starting with the IBM S360/168 in 1973, all such table translations have been supplemented by the use of a Translation Lookaside Buffer, TLB, to improve performance. The 80X86 uses a typical TLB in a very typical fashion, shown schematically in Fig. 3.

It should be noted that the Intel segmentation functions performed in Fig. 2. are completely independent of the virtual translation functions in Fig. 3. In principle, we could have a virtual memory function without the segmentation function. Thus it is clear that the virtual memory space available on the system is determined by the functions in Fig. 3. From our previous definition of virtual address, it is clear that since the total linear address which is translated is 32 bits, the true, effective virtual address cannot be any larger, and in fact is 32 bits. Let us go on to see the implications of this when trying to access a larger address space.

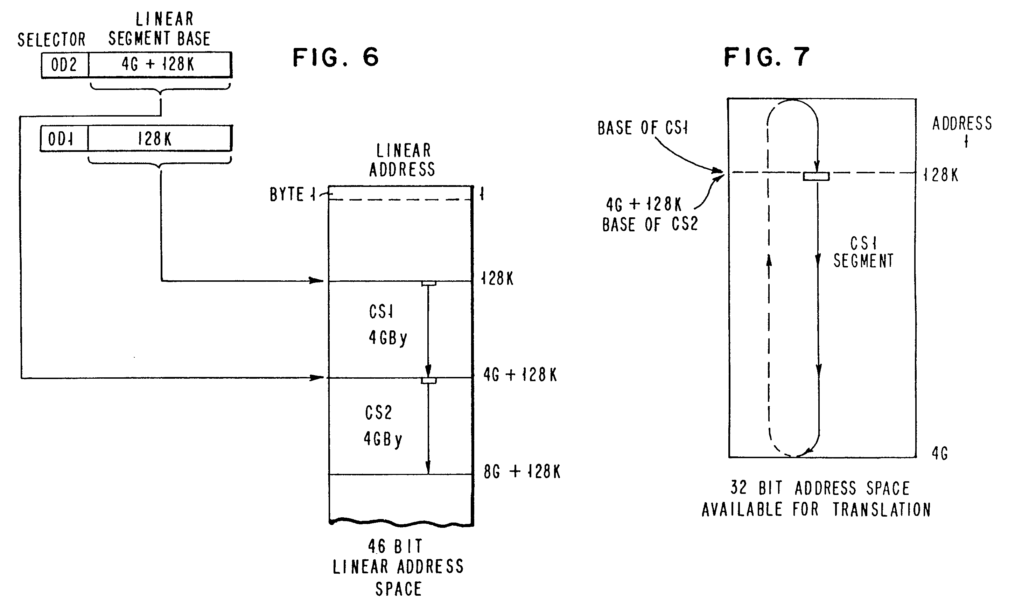

Suppose that it is desired to make a reference to code in the second segment, CS2. If the system truly has a 46 bit virtual address, then the second segment should easily coexist with CS1 both in the virtual (linear) address space as well as in the physical memory space. It will be seen that in fact, neither of these are possible in the UNISPACE system. To show this, we will continue with the segment mappings shown in Figs. 4 and 5. Segment CS1 of 4G bytes length starts at linear address (base) of 128K as shown in Fig. 6. Segment CS2, also of 4G bytes length, starts immediately after CS1 in linear space, at linear address 4G + 128K as also shown in Fig. 6. Assume that a selector and corresponding descriptor have been constructed somewhere (location not important for now) at a selector value (index into the descriptor table) of OD2 with the linear segment base of value 4G + 128K as shown. Unfortunately, these two segments must map onto a total translatable address space of 32 bits or 4G bytes. This forces CS1 to be of total length less than 4G bytes, otherwise it will produce linear addresses which are indistinguishable from addresses in CS2. For instance, if a logical address in CS1 of value 4G is permitted, it is ADDED to the linear base and produces a linear address of 4G + 128K which is the starting address of CS2, as shown in Fig. 7. Thus in linear space, CS1 starts at address 128K but as shown in Fig. 7, it must wrap around and end at linear address 128K. Now we wish to map CS2 onto linear space. The base addresses available are the same, identical addresses as the full code segment of CS1. If we do not allow the two segments to overlay in virtual space, while still insisting on complete logical isolation of the segments, we basically have to resort to the very old and cumbersome technique that has been used for overlaying main memory. As with any system having a virtual memory capability, the overlay can be done in virtual space and the paging mechanism is allowed to do the actual page swapping, etc. A crucial consequence of this overlaying in virtual space is that only one of the two desired segments can be valid and mapped via the translation mechanism (translation tables, TLB etc.) for any given access, since any given linear address can be valid for either segment. The correct segment is the one whose underlying linear addresses are currently pointed to by CR3, the base of the translation tables. (In the Intel 80X86 architecture, CR3 ≡ Hardware Control Register #3) A switch from one segment to the other will require the reloading of CR3 which automatically invalidates the entire TLB (the only architected way to purge the TLB). The CR3 is thus reloaded with the real base of the page directory for the new segment's linear address space. In a true 46 bit virtual address space, the translation mechanism would inherently be capable of allowing both segments to be present and mapped simultaneously (e.g., in TLB). This is not possible in the UNISPACE architecture because it supports only a 32 bit virtual address space.

For the general case, overlapping of segments must be prevented. However, in some cases it is desirable and possible, such as for sharing of common system functions - but it requires careful mapping of the address spaces as well as internal control of the Present bits in the descriptors, and CR3/TLB. For cases in which segments are not to be shared, but rather are protected from each other, the UNISPACE system imposes a severe restriction on the size of segments in linear space, namely for non-overlaying segments, the sum total of all segments must be no greater than 4G bytes. Furthermore, even in the case where the total length of all segments is less than or equal to 4G bytes, a change from one segment to another requires a change in the table base in register CR3 and invalidation of the entire TLB. This is because when a different segment pointer is used some (many) of the addresses in the TLB are no longer valid. Intel chose in their architecture to invalidate the entire TLB. The invalidation of the entire TLB upon a reload of CR3 is built into the hardware of the system, and in fact this Reload-of CR3 instruction is the only architected way to change the contents of the TLB. An improvement in the system could be obtained by decoupling the changes in the TLB from a reload of CR3 and providing a separate instruction for PURGE of specified virtual addresses in the TLB as will be described subsequently.

To summarize, there are two basic characteristics of the UNISPACE architecture that constrain the addressable virtual memory to 4G bytes (e.g., 32 bit address space). First, the Segment Selector is nothing more than an External name for a segment, i.e., an alias to a memory object. This is evident from the fact that the Selector value of 14 bits could be changed to, say, 32 bits and none of the arguments given above would be affected. This is a consequence of the fact that the selector is not catenated to the logical address and in fact is not really part of the virtual address - it is just a convenient way to externally name segments. While such aliasing has benefits for controlled sharing of memory, it does not expand the virtual addressing capability of the programmer beyond 4G bytes.

Another improvement to the system would be to actually catenate the segment address to the linear address or address offset to get a true 46 bit virtual address. This possibility of architecture modification is explained and studied in more detail later.

A second shortcoming of the UNISPACE architecture is the fact that the base virtual address of any segment can only be located within a linear address of 32 bits, which is added to the 32 bit logical address to obtain the final 32 bit linear address of the target. An alternative way to obtain a 46 bit (or larger) virtual address would be to shift the descriptor base to the left by 16 places before adding to the logical base. This would give the system a quasi 48 bit virtual address wherein multiple segments, up to 64K (16 address bits) of 4G bytes (32 address bits) each could be simultaneously valid. For instance, if the TLB was sufficiently large, portions of many segments could be simultaneously mapped in main memory via the TLB with no conflict of addresses. In fact, each entry in the TLB could reference one page of a different 4G bytes segment since the total address translated would be 48 (-12 real) bits.

In order to achieve this, it would be necessary to change the UNISPACE system hardware so that the TLB is not invalidated each time a new translation table is pointed to by CR3. In fact, it is desirable to have several CR3 type registers so that several different translation tables can be immediately pointed to without having to reload CR3 for each change. This latter idea of multiple CR3 registers is the basis of the preferred embodiment of the invention for proposed improvements to the current UNISPACE architecture, all as set forth and described subsequently.

DESCRIPTION OF THE PRIOR ART

US Patent 4,430,705 by Cannavino et al, "Authorization Mechanism for Establishing Addressability to Information in Another Address Space." The major objective in this patent is that it "permits one program in one address space to obtain access to data in another address space without invoking a supervisor." The fundamental problem is inherent in the original 370 architecture. There were originally only two modes of operation for the processor, namely problem (user) state or privileged (supervisor) state. If one wishes to share an address space, a supervisor call must be issued to first check access rights, then load the User ID (typically the STO register) with the correct pointer to a segment table, and then let the user proceed with the original access. There was only one STO register, and it could only be changed by the supervisor.

This is a slow process and consumes many machine cycles. If the user switches back and forth between shared and unshared code, then the supervisor call must be done each time. This patent just provides a mechanism for doing the switching overhead once and storing the results with access rights placed in an access table. Now when a user accesses shared code, a very simplified form of privileged state control, namely "semi-privileged" is entered to perform the switch and associated checking. Thus the essence of this patent is a newly defined "semi-privileged" state and its use for sharing in S370 architecture. Initially, the operating system can establish a PSW Key Mask for a given user. This is the mask stored in CR3 (IBM architecture), consisting of 16 bits, each bit specifying which of the 16 keys can be used by this user. Then in semi-privileged mode, that user can change and use any of the keys enabled by the key mask.

This patent does not read on the subject disclosure because both the objective and specific logical implementation are quite different.

US Patent 4,432,053 Address Generation Apparatus and Method by Gaither et al. This patent points to a segment in a manner which is only very slightly different than that used in the IBM PC/RT, processor described previously in the Background of the Invention section, for instance. In PC/RT full field of a Register is added to the displacement to get the 32 bit virtual address. Then the higher order 4 bits of this virtual address are used to select a segment register, the contents of which (16 bits, but arbitrary) are catenated to the remaining 28 bits to get a 40 bit virtual address. In the Gaither patent, the higher order address bits for selecting a segment are taken from the Index (like GPR) Register and the remaining bits of that index register are added (or subtracted) from the displacement field. Whether the high order bits are used directly out of the index register or after going through the ALU is more of a performance issue rather than fundamentally different. It should be noted that this technique, in either case, only extends the processor's internal virtual address, and does little for the individual user. It is useful mainly to the operating system for managing memory. The original Intel 80386 architecture achieves a somewhat similar end result, but in a very different manner. Rather than pointing to a particular segment via the higher order address bits, the Intel architecture makes an implicit connection between the type of information being accessed (code, data, task switch state, extra) and the segment. In addition, a separate address prefix can be used, if desired, to override the implicit connection and thereby explicitly point to one of these segments.

Once again, this Gaither patent has more in common with the original Intel architecture than with the present invention.

US Patent 4,495,575 by Kazutoshi Eguchi Information Processing Apparatus for Virtual Storage Control System, issued Jan 22, 1985. All of the concepts described and claimed in this patent have been well known for 5 to 10 years before this patent issued. Many of the concepts are discussed at length in a book, Computer Storage Systems and Technology, published in 1977.

It appears that this patent contains two principle claims. The first one, which is well disguised, is really a description of a "Virtual cache". The second one is the use of Space ID's to point to different virtual address spaces. The first one above, i.e., virtual cache, makes use of the CPU virtual address to access the cache (buffer storage in this patent). The IBM 195 of 1971 vintage did exactly that, although it did not have virtual main memory. The concept of "Space ID" used in this patent is identical with the concept of "USER ID" which is discussed in detail in a book by one of the present inventors herein entitled "Computer Storage Systems and Technology," R. Matick, John Wiley and Sons, N.Y., 1977. Pages 622 and 627 of the book show diagrams almost identical to Figs. 5 and 6 of Eguchi, in which a cache is shown being accessed by a virtual address which has a USER ID portion, labeled nd (This is defined earlier in the book as the User ID). There is little in this patent which anticipates the concepts of the present invention

IBM Technical Disclosure Bulletin Vol 25, No 11A, April 1983 Virtual Address Translation Registers by J. B. Kirby. This article defines a way to expand a CPU logical address (Virtual Address) of a given size to a LARGER REAL main memory address. This is totally irrelevant to the subject inventions. In the present invention, the true, effective size of the internal virtual address is expanded to a larger value. The size of the Real Main memory address is of no concern in the present case, i.e., it can be anything.

It is the object of the present invention to provide for the expansion of the virtual addressing capabilities of the previously described architecture, to make some or all of the segment/descriptor portions of the address fully translatable in such a virtual memory system, and to provide such an expanded virtual addressing capability while at the same time maintaining compatibility with programs written to run on non-expanded systems.

It is yet another object of the invention to provide such an expandable virtual addressing capability in a "INTEL 80386 like architecture" including the provision of a plurality of addressable registers for selectively storing base address pointers to system page translation tables which allows as many translatable segments of memory to be stored in the system and translated as there are such addressable control registers.

The objects of the present invention are accomplished in general by providing, in a modified UNISPACE architected virtual memory system normally having M translatable virtual address bits, a method and apparatus for creating an $M+N$ translatable virtual address space by providing $2^N$ additional memory segments in the virtual address space, which are simultaneously accessible to the system by making an N-bit segment identifier part of the virtual translatable address space.

A modified hierarchical segment based virtual memory system is provided for such a Unispace architected computer system wherein segment descriptors comprise the names of, and in essence point to various addresses in auxilary storage. These addresses are used to access auxilary storage and transfer data to local high speed memory. The memory system includes a memory management function which generates all necessary translation control addresses including page translation tables for storage and main memory. Each of the translation control addresses is related to a particular segment in the data base and provides a base for entry into the page translation tables for translating any addresses within that segment. A plurality of translation control registers is provided each of which is directly associated with a plurality of segment selectors stored in a segment table. Means are provided for loading said plurality of translation control registers when the segment tables are loaded by the system controls. There are $2^N$ active segments available to the system and up to $2^N$ translation control registers associated therewith each segment has an N-bit translation control registered identifier field associated therewith. As many N-bit translation control address registers are provided as there are translation control registers each of said address registers containing the address of a particular translation control register. Means are provided for accessing a particular translation control register associated with the current segment being accessed by the computer and the address stored thererin is utilizied to access the correct portion of the page translation tables in memory. After the address is translated, the N-bit translation control address field is concatenated with the virtual address portion in the translation lookaside buffer and becomes a portion of the translatable address. Many currently available microprocessors such as the Intel 80386 are believed to have a very severely limited memory management architecture which restricts the effective virtual addressing space to 32 bits. This is a serious limitation in such future systems. This problem has been described previously in some detail. Several possible ways are proposed herein for improving the virtual addressing capability of such systems. A preferred embodiment, utilizing a plurality of CR3 Control Registers, is described in considerable detail, including compatibility, architectural changes, and implementation aspects. The designation of a different translation table address or pointer by each CR3 register provides the capability by which each CR3 register may be utilized to effectively extend the virtual addressed memory space. An essential feature of the invention is that the enhanced hardware remains compatible with the data bases and programs originally written for earlier e.g., 80X86 architectures.

Other objects, features, and advantages of the invention will be apparent from the following description thereof in conjunction with the figures.

Fig. 1   Comprises a diagrammatic illustration of the generating of Effective and Logical addresses in a target UNISPACE architecture.

Fig. 2   Comprises a diagrammatic illustration of the translation of the Segment name (selector) to a "Linear" address in a target UNISPACE architecture.

Fig. 3   is a diagramatic illustration of the translation of addresses from Linear to Real Physical (real) in the Intel 80X86 micro processor.

Fig. 4   comprises a diagramatic illustration of a true 46 bit Linear address space showing the mapping of multiple 4 giga bit segments.

Fig. 5   comprises a diagram similar to Fig. 1 illustrating the segmentation scheme utilized in the Intel 80386 micro processor showing the functional use of Selectors and Descriptors.

Fig. 6   comprises a diagram illustrating the mapping of two 4 giga bit segments into adjacent addresses in a 46 bit linear address space.

Fig. 7   comprises a diagram illustrating the overlay of two 4 giga bit data segments in a 32 bit translatable address space.

Fig. 8   comprises a high level functional block diagram of an address translation system incorporating the features of the present invention for the expansion of simultaneously addressable virtual address spaces in an Intel 80386 micro processor architecture using multiple CR3 registers.

Fig. 9   comprises a logical/functional schematic diagram of the hardware necessary for achieving compatibility of the herein described extended address space with a current Intel 80386 TLB translation mechanism.

Fig. 10   comprises a diagram implementing a "DEFINE {eg} = {CR3 ADDRESS}" instruction utilizing the "MOVE GPR to special register function", and a micro code address to specify the particular CR3 register to be loaded.

Fig. 11   comprises a diagram illustrating the implementation of a "Load CR3 Register" instruction utilizing the "MOVE GPR" to special register and instruction field "GPR destination" to specify the CR3 register to be loaded.

Fig. 12   Comprises a data flow diagram of the preferred embodiment of the invention illustrating the sequence of address generation steps and final main memory access which would occur in an INTEL 80 x 86 architecture modified in accordance with the teachings of the present invention.

Assuming that the previously defined and generally accepted definition of a virtual address space is adhered to, then the actual virtual address available in any system is specified by the total linear address which is simultaneously translatable to the physical main memory address. Here the operative words are, of course, "simultaneously translatable". In the current implementation of the 80386, this address is the 32 bit linear address. Thus, in order to provide additional address space, the actual translated address must somehow be increased in length. There are many ways in which to achieve this, starting from different points in the system hardware and/or architecture, each with advantages and disadvantages. Several possibilities are considered below, starting with the most feasible in terms of ease of implementation and minimal impact on the architecture/operating system.

I. Expansion of Simultaneously Addressable Virtual Spaces Using Multiple CR3 Registers

A very simple and attractive method for increasing the total virtual address space in the 80386 is to introduce additional CR3 system control registers, and include the address of the register as part of the translated linear address.

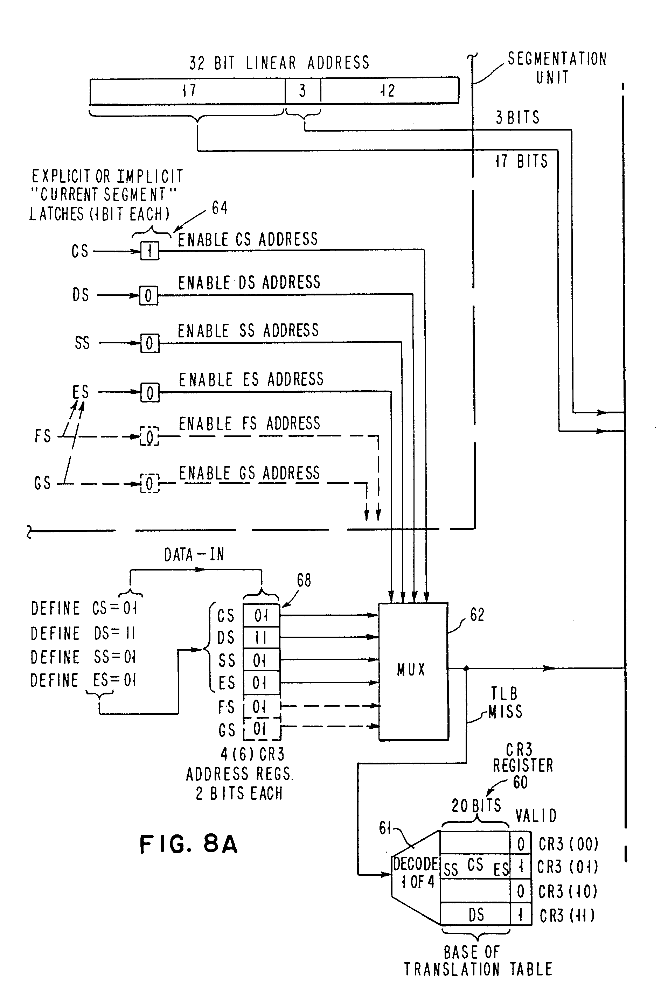

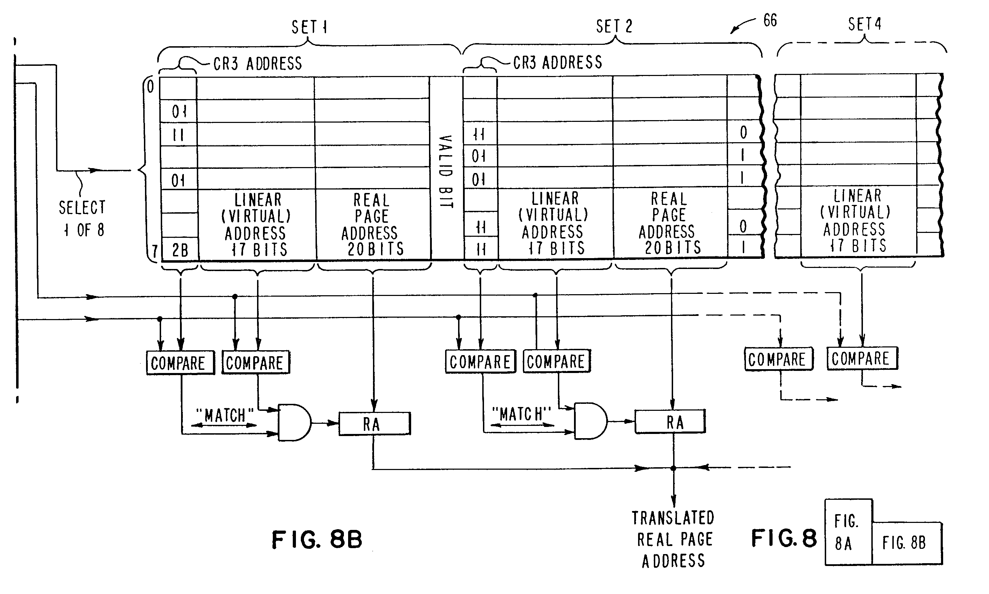

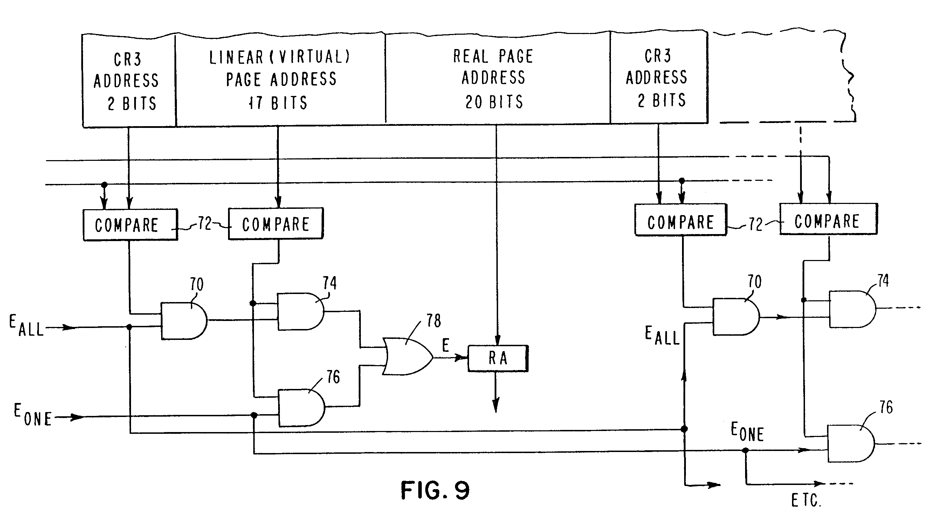

The incorporation of the broadest concept of the present memory management architecture in an Intel 80386 system is shown schematically in Fig. 8 and works as follows. It will be recalled from the previous description of Fig. 3 that CR3 contains the starting base address of the translation tables for the address space that is currently mapped to the physical memory. If it is desired to change to a different address space, it is necessary to reload CR3 with a new base which totally invalidates the TLB. As stated previously, this is a complex and time consuming operation, and is eliminated by the architecture described in Fig. 8. This results from the fact that each of the address spaces pointed to in each individual CR3 register can be valid and simultaneously resident (translatable) in the TLB. In addition, and very important, each of these address spaces can simultaneously be 4G bytes long. For instance, suppose a total of 4 CR3 registers are provided, with addresses 00 through 11 as shown. Suppose that at a given time, the current code segment of 4G bytes is pointed to by CR3(01), and a separate 4G byte data segment is pointed by CR3(11). The 32 bit linear address for code or data will be generated by the segmentation unit exactly as done in the current 80386 system, as well as translated in the same manner via tables or the TLB as shown. One function required in the segmentation unit is to latch the identity of the particular segment which is currently being explicitly or implicitly accessed by the executing instruction. There are 6 segment registers in the 80386, (See Fig. 6) one for Code Segment CS, one for Data Segment DS, one for Stack Segment SS, and 3 additional data segments labeled ES (Extra Segment), FS, and GS. Ideally one "current segment" latch for each of these is desirable. These can be obtained in a number of ways. Within the current Intel architecture, the six segment registers are already identifiable with separate codes. Since these codes are typically latched at the beginning of a segmentation cycle and remain latched until the translation is done, these signals can serve either directly or indirectly as the "Current Segment" latches in Fig. 8 and should need no special implementation. Note that as shown in Fig. 8, there are some options on the number of Current Segment latch signals actually needed. Ideally 6 such signals, each one pointing to a separate CR3 Address Register 60 (shown dotted) is desirable. However, 4 CR3 address registers 68, pointed to by either 4 or optionally 6 Current Segment signals is workable via latches 64. These latter signals act as enables on the Multiplexor 62, MUX, to read the Address of the corresponding CR3 register for the current cycle (other implementations are possible). The ADDRESSES in the 4 (or 6) CR3 address registers 60 must be quickly available since one of them is used for every translation via the TLB 66, as shown. If there is a TLB miss due to a "no-match" condition then the same 2-bit address is used to access the actual, corresponding CR3 register for the base of the translation table for TLB reload. This reload process is identical to that currently done with the one addition that the 2-bit CR3 address field is included in the TLB entry which is reloaded, as shown. (See Figs. 8 and 9)

Since each CR3 register 60 can point to a separate translation table 66, the 2-bit CR3 address does not have to be part of the virtual address in the table i.e., the tables are identical to those currently used in 80386 architecture.

This implementation requires 3 NEW INSTRUCTIONS;

1. DEFINE {SEG} = {CR3 ADDRESS} This specifies what address value, 00/01/10/11 will be placed in the 2-bit CR3 Address registers. For the above case, the following would be used:

DEFINE CS = 01

DEFINE DS = 11

If it were desired to have the stack and extra segment, SS and ES in the same segment as the code CS, then each of these could be defined as shown, namely,

DEFINE SS = 01

DEFINE ES = 01

Likewise if there are FS and GS address registers. (As noted previously if there are more then four CR3 registers, 3 or more address bits will be required.)

Alternatively, SS and ES could have been placed in separate segments by using CR3 addresses 00 and 10 respectively.

2. LOAD {CR3 at CR3 Address} with {Translation Table Base}

For the above example, we would have used

LOAD CR3(01) = Base of CS Translation Table

LOAD CR3(11) = Base of DS Translation Table

Note that CS, SS, and ES now all point to the same Translation Table Base i.e., to the same CR3 register, and hence are designated to be in the same 32 bit virtual address space.

3. PURGE TLB of {CR3 Address}

Whenever a given segment is no longer needed and made available for other uses, it must be so declared to the system. The TLB will then be searched for entries which match the corresponding CR3 Address and have the entry VALID bit set invalid. This will both allow this TLB entry to be reused for other segments and prevents any linear address from intentionally or unintentionally accessing this segment (the compare match in the TLB always includes the VALID bit).

The architecture disclosed in Fig. 8 is considerably more versatile than the current architecture of the 80386, since it allows 1, 2, 3, or 4 address spaces, each of up to 4G bytes to be simultaneously valid and available to the user. For example, continuing with the above case, suppose an executing instruction has reached the segmentation unit; the 32 bit LINEAR address has been generated in the usual manner and this address makes reference to the code segment, CS. The hardware will capture this state by setting to "1" the 1-bit"Current Segment" latch 64 which corresponds to CS, as shown (the other 3 latches will be 0). When this 32 bit linear address is passed to the paging unit for translation, only the higher order 20 bits (page index) are translated, as usual (the lower order 12 are the real byte index within a page). The 3 lower order bits of the 20-bit page index are used to access one of 8 congruence classes in the TLB which currently has 32 total page entries and is 4-way set associative as shown. That is, each set has 8 entries, 4 x 8 = 32. The remaining 17 bits of the linear page index are compared with each of the 4 page indexes in the congruence class as done in the current system. The present architecture requires that the 2-bit address of the "current segment" be included in the comparison since any of the four addresses can be valid in the TLB. Thus the 1-bit "current segment" latch which is valid at the moment, CS in this case, will enable the address 01 from the CS Address Register 68 to be gated to the TLB 66 for the 2-bit compare over each of the 4 additional CR3 address fields of the congruence class. If a TLB miss occurs, the same 2-bit CS address, 01, is used to access the Translation Table Base in the CR3 register stack 60, CR3(01), which was previously loaded by the system with the correct base address. The reload continues as it is currently done with the addition that when the translated entry is placed in the TLB, the 2-bit CR3 Address, 01, must also be stored as part of the virtual address.

Since the total translated address has been increased by 2-bits, the total effective virtual address is now 34 bits rather than 32. This is clear since there can obviously be 4 different CR3 addresses in the TLB at one time.

Compatibility of the herein disclosed modified UNISPACE architecture with the current Intel 80386 system architecture is simple and inherent. For instance, when running a program written for current 80386 architecture, the operating system will load the same address into all four of the CR3 Address Registers 68, say address 00, and then load only the register CR3(00) of CR3 stack 60 with the one Translation Table Base.

Note that since the operating system can load whatever addresses it wishes into the 2-bit CR3 Address Registers 68, one could use this as a method for sharing segments. For instance, in Fig. 8, the CR3 60 Address Registers CS, SS, and ES point to the same virtual segment. If CS represents one user and ES represents another, then they automatically share the same segment. The access rights would be evaluated by the system before the ES Address Register 68 was loaded in this case.

Compatibility of the herein described and modified architecture with the current system architecture may be easily accomplished in hardware, in several ways. For instance, the above compatibility procedure via the operating system could be mimicked directly in hardware. An even simpler method is to just disable the use of the 2-bit CR3 address in the TLB compare - this could selectively be turned on and off by the logic shown in Fig. 9.

Two signals $E_{all}$ or $E_{one}$ would have to be activated by the system controls depending on whether or not the CR3 address bits are to be considered in the translation. If CR3 translation is desired, the $E_{all}$ signal will enable all of the AND circuits 70 associated with each associative set of the TLB, the other inputs to the AND circuits 70 are the outputs of the compare circuits 72 connected to each sets CR3 address field. The output of the AND circuits 70 enables the AND circuit 74 to enable comparison of the 17 bit linear (virtual) address field in a well-understood manner.

If it is desired that only a single 17 bit TLB entry be considered, signal line $E_{one}$ is enabled which enables the AND gates 76 so that the activities of the OR gates 78 to access a particular REAL ADDRESS if a successful comparison access is one of the sets.

Thus to synopsize, the selective enabling of
1) $E_{all}$ - enables comparison of 2 bit CR3 address field as well as the 17 bit linear address for Full Virtual Address implementation.
2) $E_{one}$ - disables comparison of CR3 address fields to give current to 80386 compatible translation while still allowing an examination of the usual 17 bit linear address.

Now only a 32 bit linear address is translated which is identical to that currently used. It is also necessary that the hardware always use only one CR3 register, say CR3(00) to store the Translation Table Base and ignore any address stored in the CR3 Address Registers. Thus these latter four 2-bit registers would not have to be managed by the operating system. One additional instruction of Initial Program Load procedure would be required to select the desired operating state. e.g., $E_{all}$ or $E_{one}$.

It is obvious that more than 4 CR3 registers could be included, for instance 8, 16 or more. The 2-bit CR3 address registers would, of course, have to increase to 3 and 4 bits respectively, with a corresponding increase in the effective virtual address space being translated to 35 and 36 bits respectively.

Multiple CR3 Register System Additions for Implementation;

Assuming the four - CR3 Register configuration shown in Fig. 8, the following five additions are required for the implementation.

1. 3 New Instructions - these have been defined above. They will now be discussed briefly and their implementation described in more detail.

a. DEFINE {SEG} = {CR3 ADDRESS}

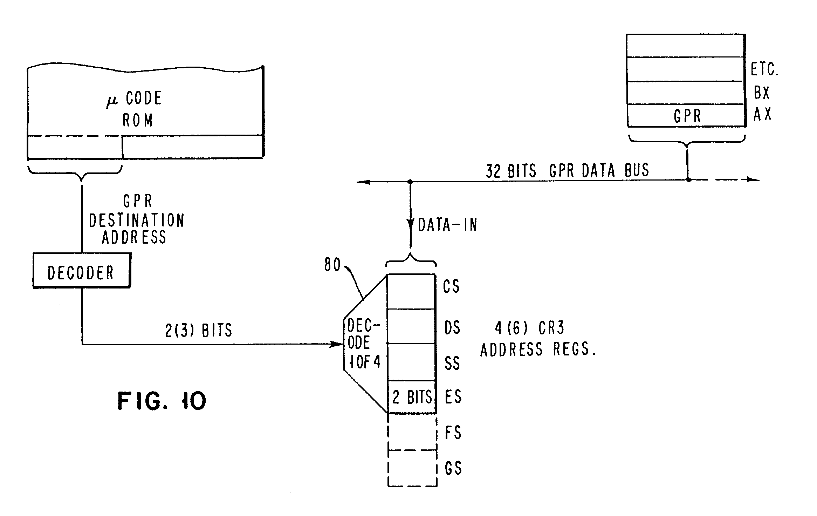

The following discussion is illustrated in the data flow diagram of Fig. 10.

This instruction can be grouped with the MOVE instruction that moves to/from special registers. The 2-bit address to be loaded into the CR3 Address register 68 could theoretically be immediate data in the instruction. However, this is inconsistent with the current 80386 architecture where all special registers are loaded to/from general purpose registers. In order to remain consistent, the 2-bits of data will come from a previously loaded general purpose register.

b. LOAD {CR3 at CR3 address} with {Translation Table Base}

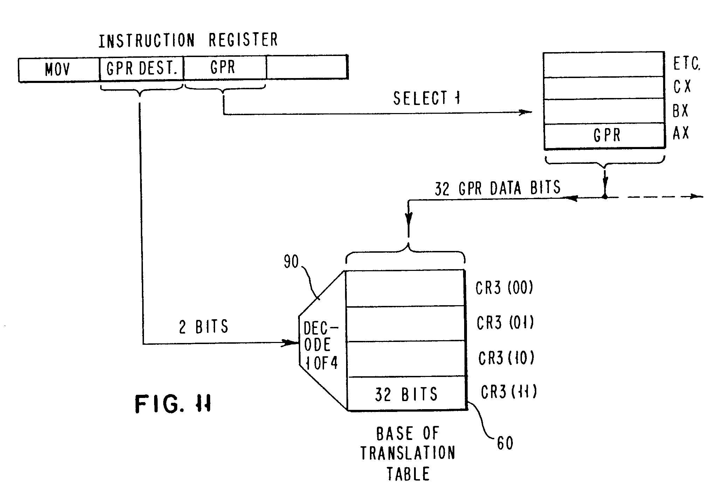

This instruction is illustrated in Fig. 11 and can be implemented with the current MOVE (register) to (control register) instruction. Probably no additional opcode space will be needed. In such a case, the only increase in the decode hardware is the addition of 3 more GPR data destination codes (the current single CR3 architecture requires only one) for the 3 additional CR3 registers, which amounts to a 2-bit decoder 90 to select 1 of 4 CR3 registers as indicated in Fig. 11.

c. PURGE TLB of {CR3 Address}

Although the Intel 80386 has no instruction for purging the TLB of a given address, such an instruction can be easily implemented as will be well understood by those skilled in the art. Therefore, such a micro-instruction can be used to access the TLB, entry by entry, and purge all the entries with a given 2-bit CR3 register address. Additional control has to be provided to ignore (an appropriate disable signal) the result of the 17 bit comparators and use only the result of the 2-bit CR3 address comparators. In addition, the TLB hardware will have to have the capability of invalidating multiple entries in the same congruence class in stead of only one as is currently provided for. This function can also easily be implemented by those skilled in the art.

2. Each TLB entry will require 2 additional bits (CR3 address); each of the 4 sets will require one additional 2-bit compare and an AND circuit. The current 80386 TLB has approximately 42 bits per entry and one 17-bit compare per set. Thus, the additional circuitry would add roughly 6 percent to the TLB area in current VLSI implementation.

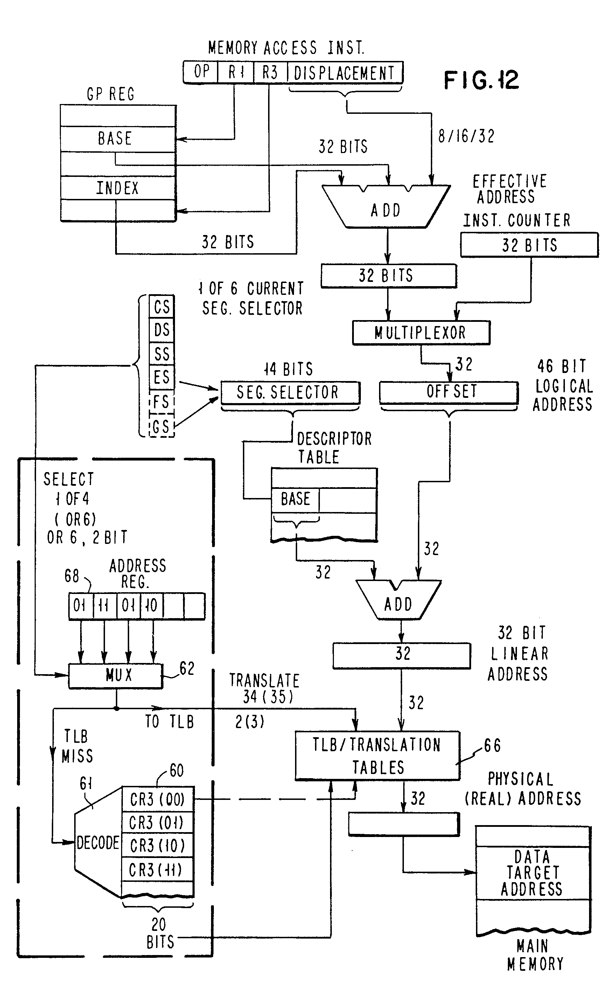

Figure 12 comprises a data flow diagram which synposizes the significant features of the preferred embodiment of the present invention used to modify an INTEL 80-80X86 architecture and, in essence, defines the terminology for the various addresses during the sequential steps of address generation within the INTEL 80X86 architecture.

Beginning at the top of the figure, an initial program instruction is loaded which implies or requires a memory access with the opcode and various address fields being appropriately set. The portion at the left hand side of the figure, surrounded with dotted lines, indicates that portion of the overall system which have been added by the preferred embodiment of the present invention. All of the elements making up the added portion are shown in Fig. 8. As one additional note, the dotted line going from the upper CR3 register entering the bottom of the TLB/Translation Tables implies the basic translation control register (CR3) which is normally provided in the INTEL 80X86 architecture shown in Fig. 3. The remaining CR3 registers are added by the present invention as well as the decode logic for selecting a particular one in accordance with a given memory access, all as explained previously in detail.

Returning to the figure it will be noted that there are essentially three stages of virtual addresses which are shown as the EFFECTIVE, LOGICAL, and LINEAR address. It will also be noted as stated previously, that while the addresses are in a virtual address space the entire addresses are not translatable. The LINEAR address is finally converted to the PHYSICAL or Real address via the translation mechanism shown at the bottom of the figure wherein the input to the translation mechanism are the thirty-two bit LINEAR address and the (2 or 3 bits) N-bit translation control address register field when a TLB access occurs. When a TLB miss occurs the main page translation tables are accessed in main memory utilizing again the thirty-two bit LINEAR address but beginning at the particular base address in the page translation tables pointed to by the selected translation control register (CR3) which is indicated by the control field in the translation control address register.

It will also be noted, that in the left hand portion of the system within the dotted lines the same reference numerals are utilized to refer to the same physical elements of the system as in Fig. 8. Also the size of the instruction field illustrated is similarly indicative of the INTEL 80X86 architecture, however, as will be readily apparent, the principles of the present invention would clearly apply to other architectures having different address field sizes as will be apparent to those skilled in the art.

## II. Catenation of Selector Field for Larger Virtual Address

Neglecting for the moment the issues of compatibility and implementation, an optimum virtual address mechanism would eliminate the segmentation unit of the 80386 architecture entirely, and CATENATE THE 14 (16) BIT SELECTOR TO THE LOGICAL ADDRESS. This 46 (48) bit linear address would then be translated in a manner similar to that in Fig. 8 except the 2-bit CR3 Address field becomes the 14 bit Selector. The 17 bit linear address remains but the external value for comparison now comes from the logical address rather than from the "linear address" currently generated by the segmentation unit. This Ideal Virtual Addressing eliminates the need for the separate CR3 Registers to store the translation table bases, since these bases can be obtained as follows. The Selector is still used as an index into a "descriptor" table but now this descriptor is just the Base of the Translation Table. In order to improve performance, one or several CR3 type registers could be included as a fast access to the translation tables on a TLB miss when the page is in memory but not in the TLB.

This embodiment has a profound impact on the system and architecture. The essential changes are the following:

First, it would eliminate descriptors entirely, and replace them with a "Base of Translation" Table.

Secondly, it would keep selectors but change their function - rather than being just an external segment name, they are catenated to the logical address and hence are part of the virtual address. There is one difference, however, namely the manner in which the selectors are accessed. They can be accessed in the manner currently done in the 80386 -- certain instructions imply a certain segment register (selector). A different selector (segment) can be accessed by using prefixes before the instruction as done today.

This latter embodiment actually gives the selectors an internal function which is much closer to the external appearance they currently have. In fact, this is one of the implementation features of the 80386 which leads to so much confusion. The external, user view of the selectors is that it really is part of a 46 bit virtual address, when in reality it is nothing more than an external name for an arbitrary length of linear address space within a total 32 bit virtual address space.

The present invention totally eliminates the notion of descriptors and gates, thereby requiring a totally different protection and privilege mechanism. A scheme similar to the 4-bit keys used in IBM S/370 is possible and workable.

A difficulty with the above described architecture is that it requires very substantial redesign of both the 80386 hardware and architecture, in addition to the operating system, all of which are difficult. Thus an alternative improvement would be to catenate the Selector as above but keep the segmentation exactly as currently implemented, e.g., the linear address is generated by adding the descriptor base to the logical address. Thus the Selector will not only be an external name which indexes into the descriptor table, but also is part of the virtual address i.e., the same selector is catenated to the 32 bit linear address to give an effective 46 bit virtual address. This is translated in the TLB in the usual way, each set requiring one 14 bit selector field for Address Compare in place of the 2-bit CR3 Address field in Fig. 8. The use of multiple CR3 registers may or may not be desirable and is a performance issue. In any case, the CR3 addresses need not be in the TLB.

In this particular embodiment, the descriptors are kept as currently architected in the 80386 only to maintain the constructs of call gates and privilege level passing - in terms of the virtual address itself, they are of no value.

To implement this latter embodiment requires substantial changes to the current architecture and operating system. Each entry in the TLB will require an additional 14 bits (the selector as a virtual address) and an additional 14 bit compare circuit for each set. This will increase the TLB size by approximately 33 percent, for any given size TLB i.e., the additions are a constant percent of the number of entries as long as the remaining fields in the TLB do not change.

If found necessary and/or desirable to have all $2^{14}$ segments translatable at the same time, then the translation tables must get larger in one of several ways, (a) the table entries can remain much as they are but 16K more entries are required or (b) the number of entries can remain as currently but the 14 bit selector will have to be included as the virtual address in each entry of the translation table, and used for compare against the appropriate part of the given linear address (a partial Inverted translation table). While the large size and management of this architecture is a non-trivial concern, the same table size and management problem exists for ANY system which provides an effective 46 bit virtual address.

## III. Increased Segment Descriptor Base Length

Another way to improve the segmentation capabilities of Intel 80386 is to increase the size of the segment base address which is stored in the descriptor table from 32 bits to 46 (or more if desired). The selector value of 16 (actually 14) bits, which is only an index into the descriptor table, can remain as is, and used the same as today. Note that the user's logical address space is still only 32 bits, but it is possible to now have 64K segments of 4G bytes each, all simultaneously mapped onto the 46 bit virtual address. In the current 80386 it is not possible to have, for instance, two private address spaces of 32 address bits each, both simultaneously mapped in linear space via the active translation tables and/or TLB, as was discussed in detail previously with respect to the multiple CR3 register embodiment.

The implementation of such a system of course requires that the TLB and translation tables must be capable of translating the full 46 bit (minus the 12 page index bits) virtual address, whereas only a 32 bit address can be translated in the current system. The changes which must be made to the hardware and software to achieve this are as follows.
Descriptor Tables -- add 2 bytes to each entry.
Translation Tables -- add 2 bytes to each entry.
TLB -- current size is

(20 - TLB index) + (Real Main max) + 5 control

= 17 + 20 + 5 = 42 bits per TLB entry

For a 48 bit virtual address, add 2 bytes to each entry for total of

42 + 16 = 58 bits per TLB entry or an increase of 38% in the overall TLB size

In the above proposed implementation, the translation tables and TLB must be capable of translating a 46 bit virtual address, but the logical address remains at 32 bits. However it is possible to increase the logical address to 46 bits also, since this would not increase the translation tables nor TLB beyond that in the above proposal -- in essence, the 32 bit logical address on the current 80386 would be replaced with a 46 bit logical address with everything else remaining the same. While this is possible, this increase in the length of the logical address to 46 bits has substantially more impact on the hardware and architecture than the other proposals.

Conclusions

Four plausible methods for improving the effective virtual address space have been proposed. There are other approaches which are variations and/or combinations of the above, and also ones which undertake more radical changes to the current system and architecture. However, a major consideration in any choice is the compatibility and migration path from the current implementation to continuous evolutionary improvements in successive generations. It is accordingly apparent that the present concept for expanding simultaneously addressable virtual space using multiple CR3 like registers offers very attractive cost/performance improvements. It is a very natural extension of current UNISPACE systems and has minimal impact on both the hardware and operating system.

In summation, the fundamental, key new ideas and features of the present invention include using the segment prefix address, either given or implied, and converting same in a unique manner to become part of the true virtual (linear) address. The new and unique manner in which segment names are "exposed" or included as part of the virtual (linear) address is as follows. If four segments are to be exposed to the translation, then three additional (4 total) CR3-like registers are provided which can contain the translation table base for four different segments. Each of these segments represented by a separate CR3 register is addressed by two new virtual (linear) address bits which are provided in four new CR3 Address Registers. If it is desired to expose all six of the architected segment registers in the Intel architecture, then there would be the equivalent of three new virtual address bits used to access six CR3 Address Registers, each one associated with one of six CR3-like registers which contain bases of different translation tables.

These new virtual address bits are included in the TLB and thus are translated along with the effective address or offset, to the physical address. Only the additional two (or three whatever) bits contained in the CR3 Address Registers need be translated since they represent the true, effective, additional virtual address bits.

The appropriate prefix address bits are converted to the two (or more) new virtual address bits in a manner which is consistent with the UNISPACE system architecture, and more specifically, with the Intel 80X86 architecture.

The new virtual address bits (contained within) the CR3 Address Registers can be directly set to make these four (or more) CR3 Address Registers all point to the same, different, or whatever combination of segments is desired, all consistent with the intended architectures. (as illustrated in and described with respect to Fig. 8)

The concepts of the present invention may also be used to improve the true virtual address space of the previously described IBM systems, but would require some additional features. For instance, instead of using the four higher order bits of the effective address to point to a segment, the architecture could use a prefix field or implied segment usage, or other mechanism to identify the segment. In such a case, the actual virtual address could be extended using the basic concepts described previously above. The details of implementation would differ depending on the actual architecture and system organization, but the concept would be the same. The essential idea is to increase the number of the total, simultaneously exposed segment addresses which are translatable on the translate cycle, without having to resort to another time and cycle consuming mechanism to exchange segment addresses for one another. Furthermore, this must be done without using any of the effective address bits since any such bits used will ultimately either subtract from the virtual address, or remain part of the virtual address without increasing it.

It should be noted that in all the above, the same concepts apply whether the ideas are used to expand the segment address, or the address of some other suitably identified (named) unit that has the same functional effect. The net result is the same, namely to increase the size of the simultaneously exposed and translatable virtual address space.

While the invention has been set forth and described with respect to the preferred embodiments disclosed herein, it will be readily appreciated that many changes in form and detail may be made to the enabling hardware and software by those skilled in the art without departing from the spirit and scope of the invention as set forth in the following claims.

REFERENCES

1. INTRODUCTION TO THE 80386, Intel Manual, April 1986
2. 80386 - HIGH PERFORMANCE MICROPROCESSOR WITH INTEGRATED MEMORY MANAGEMENT, Intel Manual 23 1630 001, Oct. 1985
3. 80386 PROGRAMMER'S REFERENCE MANUAL, Intel Manual 230985-001, 1986
4. Auslander, M. and J. Jaffe, Functional structure of IBM virtual storage operating systems Part I: Influences of dynamic address translation on system technology, IBM Systems Journal, No. 4, 1973, pp. 368-380.
5. Matick R., Hybrid memory: Application of VLSI to Virtual Memory design PART II, SYSTEMS considerations, RC 9437, 6/25/82.

**Claims**

1. Hierarchical segment based virtual memory system for a high speed electronic computer, wherein segment descriptors constitute the names of, and point to various addresses in auxiliary storage which addresses are used to access auxiliary storage and transfer data from said auxiliary storage to local high speed memory in the computer, said memory system including a memory management mechanism which generates a translation control address related to each segment in the data base which address is the base address in page translation tables provided for that segment and including means for loading a memory translation control register (CR3) with a translation table base address specifically associated with a given segment currently being accessed by the computer, with means for utilizing said translation control register (CR3) to access translation tables in main memory whenever a virtual address is being translated into a physical (real) address, in the computer, characterized by

a plurality of translation control registers (CR) directly associated with a plurality of segment selectors, stored in a segment table,

a memory management/control mechanism associated with said memory system for loading said plurality of translation control registers when the segment selector tables are loaded, wherein there up to are $2^N$ active segments available to the system and up to $2^N$ translation control registers associated therewith, and wherein each segment has an N-bit translation control register identifier field associated therewith,

means for accessing a translation control register associated with a current segment being accessed by the computer under control of said N-bit translation control register identifier field and utilizing the address stored in said translation control register to access the correct portion of the page translation tables in memory and for storing said N-bit translation control register identifier field in the translation lookaside buffer (TLB) and

means for accessing said N-bit field in the TLB as a portion of the virtual page address being translated.

2. Hierarchical segment based virtual memory system as set forth in claim 1, characterized by a plurality of translation control registers directly associated with a plurality of segment selectors, stored in a segment table, a memory management/control mechanism associated with said memory system for loading said plurality of translation control registers when the segment selector tables are loaded, wherein there up to are $2^N$ active segments available to the system and up to $2^N$ translation control registers associated therewith, and wherein each segment has an N-bit translation control register identifier field associated therewith,

as many N-bit translation control address registers as there are translation control registers,

means for accessing a translation control register associated with a current segment being accessed by the computer and utilizing the address stored in said translation control register to access the correct portion of the page translation tables in memory and for storing said N-bit translation control register address field in the translation lookaside buffer (TLB), and

means for accessing said N-bit field in the translation lookaside buffer (TLB) as a portion of the virtual page address being translated.

3.  Hierarchical segment based virtual memory system as set forth in claim 2, characterized by

means for disabling a comparison of the N-bit translation control register address field in the translation lookaside buffer (TLB) for a memory access not having an N-bit addressable logical segment identifier as part of the virtual memory address being translated, means operable by decoding the opcode portion of a memory access instruction for generating a segment identifier determined by the type of segment currently being accessed,

means utilizing this information for accessing a segment/descriptor table which is combined with address data contained in the original memory access request to provide a further virtual address,

means utilizing said segment identifier for accessing a particular translation control address register,

means utilizing the address stored in said translation control address register to access a particular translation control register, and

means for also utilizing the address stored in said translation control address register as an argument concatenated to a previously generated virtual page address for accessing the translation lookaside buffer, and

utilizing the real page address stored in the translation lookaside buffer (TLB) to access main memory in the event of a translation lookaside buffer (TLB) hit or for utilizing the translation tables in main memory pointed to by the address stored in said translation control register for determining the real address in main memory in the event of a TLB miss, and

means for loading the individual N-bit translation control register identifier addresses fields in the translation control address registers under control of the memory management mechanism whereby each N-bit field points to a proper associated translation control register which in turn is related to a particular memory data segment stored in memory and which need not be related to the segment in which a subject memory access instruction resides.

4.  Hierarchical segment based virtual memory system as set forth in claim 3, characterized by

means for loading successive positions of the translation control registers with translation base addresses under control of said memory control mechanism, said addresses comprising base addresses in the translation tables in main memory related to individual virtual memory segments determined by the memory control mechanism when the data base was initially loaded into the system.

5.  Method for translating virtual memory addresses into real main memory addresses of a hierarchical segment based virtual memory system as set forth in one of claims 1-4, characterized by steps of:

concatenating an M-bit segment selector address onto said first virtual address to form a second composite virtual (Logical address) address,

utilizing said M-bit segment designator address to access a descriptor table and utilizing address data stored therein to combine with the virtual portion of said second composite virtual address to form a third virtual address (linear),

utilizing said third virtual address as a translation target address,

translating said target address into a real memory address (physical address) utilizing translation lookaside buffers (TLBs) and if unsuccessful, utilizing page translation tables stored in main memory,

accessing said page translation tables utilizing a base address accessed from a translation control register provided by system memory management controls,

the improvement in said translation method which comprises, storing in the TLB at each entry as a portion of each translation target address, an N-bit field which designates one of $2^N$ translation control registers each related to a data segment stored in said memory system wherein each entry in the translation lookaside buffer contains an appropriate N-bit translation control register address field stored therein whenever an address is translated in the page translation tables, and

means for accessing a particular translation control register pointed to by a current N-bit translation control register address field and utilizing the address stored therein to access the page translation tables in the event of a miss in the translation lookaside buffers.

6. Method as set forth in claim 5, characterized by steps of:

concatenating an M-bit segment selector address onto said first virtual address to form a second composite virtual address, said M-bit selector being obtained from the instruction,

utilizing said second virtual address as a translation target address,

translating said target address into a real memory address (physical address) utilizing translation lookaside buffers (TLBs) and if unsuccessful, utilizing page translation tables stored in main memory,

accessing said page translation tables utilizing a base address accessed from a translation control register provided by system memory management controls,

loading a translation control register, via a memory management control mechanism within the computer with a base address in the page translation tables, said base address being used whenever a translation in a particular segment is being performed,

entering every translation performed in the page translation tables in a translation lookaside buffer,

invalidating only those entries in the translation lookaside buffer containing the virtual address of a particular segment whenever the virtual address space containing that segment is changed by a new segment address and a new translation table base address is loaded into the translation control register,

loading a plurality of translation control registers with a plurality of translation base addresses and

utilizing a translation control register to access that entry in the page tables which is associated with a particular segment being addressed and invalidating selected entries in the translation lookaside buffer whenever a particular virtual address space belonging to a particular segment is no longer desired.

7. Method as set forth in one of claims 5 or 6, characterized by steps of:

concatenating an M-bit segment address onto said first virtual address to form a second composite virtual (Logical address) address,

utilizing said M-bit segment address to access a descriptor table and utilizing address data stored therein to combine with the virtual portion of said second composite virtual address to form a first portion of a third virtual address (linear),

retaining said M-bit segment address as a second portion of said third virtual address, said first and second portions comprising the total third virtual address,

utilizing said third virtual address as a translation target address,

translating said target address into a real memory address (physical address) utilizing translation lookaside buffer (TLB) and if unsuccessful, utilizing page translation tables stored in main memory,

accessing said page translation tables utilizing a base address accessed from a translation control register provided by system memory management controls,

loading a translation control register, via a memory management control mechanism within the computer with a base address of the page translation tables, said base address being used whenever a translation said a particular segment is being performed,

entering every translation performed in the page translation tables in said translation lookaside buffer, and

invalidating only those entries in the translation lookaside buffer containing the virtual address of a particular segment whenever the virtual address space containing that segment is changed by a new segment address in a new memory access instruction and a new translation table base address being loaded into the translation control register.

8. Method as set forth in claim 7, characterized by

loading a plurality of translation control registers with a plurality of translation base addresses and

utilizing a translation control register to access that entry in the page tables which is associated with a particular segment being addressed and

invalidating selected entries in the translation lookaside buffer whenever a particular virtual address space belonging to a particular segment is no longer desired.

9. Hierarchical segment based virtual memory system for a high speed electronic computer, wherein segment descriptors constitute the names of, and point to various addresses in auxiliary storage which addresses are used to access auxiliary storage and transfer data from said auxiliary storage to local high speed memory in the computer, as set forth in one of claims 1-8, characterized by

said memory system including a memory management mechanism for translating virtual memory addresses into real main memory addresses, comprising means for converting a system memory access instruction into a first virtual address (Effective address) utilizing designated base and index registers,

means for accessing a descriptor table utilizing an M-bit segment address and utilizing address data stored therein to combine with the virtual portion of said second composite virtual address to form a first portion of a second virtual address (linear),

means for concatenating said M-bit segment address as a second portion of said second virtual address, said first and second portions comprising the total second virtual address,

means for utilizing said second virtual address as a translation target address,

means for translating said target address into a real memory address (physical address) utilizing a translation lookaside buffer (TLB) and if unsuccessful, utilizing page translation tables stored in main memory,

said memory management mechanism further including means for generating a translation control address related to each segment in the data base which address is the base address of the page translation tables associated with the addresses contained in that segment and including means for loading a memory translation control register (CR3) with a translation table base address specifically associated with a given segment currently being accessed by the computer,

means for accessing said page translation tables utilizing the base address accessed from the translation control register,

means for entering every translation performed in the page translation tables in said translation lookaside buffer, and

means operative whenever a virtual address space containing a particular segment is changed by a new segment address in a new memory access instruction and a new translation table base address being loaded into the translation control register for invalidating only those entries in the TLB containing the previous segment address as a portion of the virtual address stored in the TLB.

10. Hierarchical segment based virtual memory system as set forth in claim 9, characterized by

means for loading a plurality of translation control registers with a plurality of translation base addresses and

means for utilizing a translation control register to access that entry in the page tables which is associated with a particular segment being addressed and

means for invalidating selected entries in the translation lookaside buffer whenever a particular virtual address space belonging to a particular segment is no longer desired.

FIG. 1

DESCRIPTOR TLB

## FIG. 2

| CS SELECTOR | | P | |
|---|---|---|---|
| SS | | | |
| DS | | | |
| ES | | | |
| | | | |
| | | | |
| | | | |

PRESENT

SELECTOR

STORE

DESCRIPTOR TABLE REG.

BASE

INDEX INTO DESCRIPTOR TABLE

MEMORY

DESCRIPTOR TABLE

SEG. BASE

OFFSET

SEGMENT LINEAR BASE ADDRESS

32

32

ADD

32

32 BIT LINEAR ADDRESS

# FIG. 3
## PRIOR ART

LINEAR ADDRESS

| 10 | 10 | 12 |
|----|----|----|

CONTROL REGISTER CR3

| STO1 | 120'S |
|------|-------|

PAGE BYTE INDEX

PAGE DIR. INDEX

32

PAGE TBL. ORIGIN.

PAGE DIRECTORY

PAGE TABLE INDEX

TLB
(FAST TRANSLATION IF HIT)

REAL ADR. RA

PAGE TABLE

REAL PAGE ADDRESS (20 BITS)

32 BIT PHYSICAL (RA) ADDRESS

| 20 | 12 |
|----|----|

PHYSICAL MAIN MEMORY

EP 0 464 333 A2

# FIG. 4
## PRIOR ART

| 46 BIT VIRTUAL (LINEAR) ADDRESS | ADDRESS REGISTER |

46 BIT
LINEAR ADDRESS

DECODE TO
1 OF
$2^{46}$ BYTES

| CS1 4 GBy |
| CS2 4 GBy |
| DSb 4 GBy |
| DSa 4 GBy |

$2^{46}$ BYTE
LINEAR SPACE

EP 0 464 333 A2

FIG.5
PRIOR ART

23

FIG. 6

FIG. 7

EP 0 464 333 A2

FIG. 8A

FIG. 8B

FIG. 8

| FIG.<br>8A | FIG. 8B |

TRANSLATED
REAL PAGE
ADDRESS

EP 0 464 333 A2

FIG. 9

EP 0 464 333 A2

μ CODE
ROM

GPR
DESTINATION
ADDRESS

DECODER

2(3) BITS

80

DEC-
ODE
1 OF 4

2 BITS

CS

DS

SS

ES

FS

GS

4(6) CR3
ADDRESS REGS.

DATA-IN

32 BITS GPR DATA BUS

GPR

ETC.
BX
AX

FIG. 10

INSTRUCTION REGISTER

| MOV | GPR DEST. | GPR | |

SELECT 1

ETC.
CX
BX
GPR    AX

32 GPR DATA BITS

2 BITS

90

DEC-ODE 1 OF 4

CR3 (00)
CR3 (01)
CR3 (10)
32 BITS    CR3 (11)

60

BASE OF
TRANSLATION
TABLE

FIG. 11

EP 0 464 333 A2

FIG. 12